# EUROPEAN PATENT APPLICATION

(11) **EP 4 760 803 A1**
(43) Date of publication of application: **17.06.2026**
(21) Application number: 24871089.9
(22) Date of filing: 25.10.2024
(51) Int. Cl.: H01M 4/136, H01M 4/1397, H01M 4/62

(54) **POSITIVE ELECTRODE SHEET, PREPARATION METHOD THEREFOR AND USE THEREOF**

(30) Priority: 14.12.2023 CN 202311735227
(71) Applicant: Eve Power Co., Ltd., Jingmen, Hubei 448000 (CN)
(72) Inventor: JIN, Lun, Jingmen, Hubei 448000 (CN); LIU, Fanfen, Jingmen, Hubei 448000 (CN); YUAN, Dingding, Jingmen, Hubei 448000 (CN); LIU, Qingsong, Jingmen, Hubei 448000 (CN); FU, Hang, Jingmen, Hubei 448000 (CN); ZENG, Hongchun, Jingmen, Hubei 448000 (CN)
(74) Representative: Herrero & Asociados, S.L.
(86) International application number: PCT/CN2024/127280
(87) International publication number: WO 2025/067554

(57) **Abstract**

The present disclosure provides a positive electrode sheet, a method for preparing the positive electrode sheet, and an application of the positive electrode sheet. The positive electrode sheet includes a positive electrode current collector and a positive electrode active material layer disposed on at least one surface of the positive electrode current collector. The positive electrode active material layer includes a dispersing aid, a lithium iron phosphate positive electrode material, conductive carbon black, and carbon nanotubes. The dispersing aid, lithium iron phosphate positive electrode material, conductive carbon black, and carbon nanotubes in the positive electrode active material layer satisfies a relationship: 30≤(B1 × C1+B2 × C2+B3 × C3)/A × 0.01 ≤500. By reasonably adjusting the proportion and specific surface area of LFP in the positive electrode active material layer, the proportion and specific surface area of the conductive agent in the positive electrode active material layer, as well as an addition amount of the dispersing aid in the positive electrode active material layer, multiple characteristic parameters satisfy a specific relationship, which promotes dispersion of multi-component materials, ensures a good conductive network and binder distribution state, increases the peel strength, reduces the resistance of the positive electrode sheet, thereby reducing the DCR of the lithium-ion battery and increasing the rate-discharge energy efficiency of the lithium-ion battery.

## Description

This application claims the priority of Chinese Patent Application No. 2023117352276, filed with the China National Intellectual Property Administration on December 14, 2023, the disclosure of which is hereby incorporated by reference in their entireties.

### TECHNICAL FIELD

The present disclosure relates to the technical field of lithium-ion batteries, and particularly relates to a positive electrode sheet, a method for preparing the positive electrode sheet, and an application of the positive electrode sheet.

### BACKGROUND

Currently, lithium iron phosphate has become the dominant technology in fields of commercial and even passenger vehicles. It is known that subsidies for new energy vehicles were gradually cancelled at the end of 2022. How to further reduce preparation cost of battery cells and how to further improve production efficiency are common challenges faced by battery cell manufacturers and vehicle manufacturers.

A Chinese patent application (with publication number CN113328097A) discloses an improved conductive adhesive solution for a positive electrode of a lithium-ion battery, a method for preparing the same, and an application of the same. The provided conductive adhesive solution for the positive electrode mainly includes polyvinylpyrrolidone as a dispersant, vinyl silicone oil as a suspending agent, YT 9000 polyvinylidene fluoride as a binder, N-methyl-2-pyrrolidon as a solvent, and carbon-based inorganic substance as a conductive agent.

A Chinese patent application (publication with number CN101699642A) discloses a method for preparing a positive electrode of a lithium iron phosphate battery. The method includes the following operations. Firstly, a mixture of lithium iron phosphate, polyvinylidene fluoride, carbon black, conductive graphite, and lithium titanate is prepared. The mixture is then baked in an inert gas atmosphere and cooled. After cooling, the mixture is ball-milled and screened, and the screened mixture is sealed and stored for later use. The screened mixture powder is poured into an N-methyl-2-pyrrolidone solution and stirred under vacuum conditions to ensure complete dissolution, thereby forming a slurry. An aluminum foil is then coated with the slurry, and the coated electrode plate is baked in a vacuum oven. The vacuum-baked electrode plate is rolled into an electrode sheet, thus obtaining the positive electrode sheet of the lithium iron phosphate battery.

### SUMMARY

### Technical Problem

**In** a preparation process of the lithium iron phosphate positive electrode sheets described in the above-mentioned schemes, there are deficiencies such as poor slurry stability, large N-Methyl-2-pyrrolidone (NMP) consumption, and the produced positive electrode sheets is prone to cracking and has low peel strength, resulting in low energy efficiency and high resistance.

The present disclosure provides a positive electrode sheet, a method for preparing the positive electrode sheet, and an application of the positive electrode sheet. By reasonably adjusting a proportion and specific surface area of lithium iron phosphate (LFP) in a positive electrode active material layer, a proportion and specific surface area of a conductive agent in the positive electrode active material layer, as well as an addition amount of a dispersing aid in the positive electrode active material layer, multiple characteristic parameters satisfy a specific relationship, which promotes dispersion of multi-component materials, ensures a good conductive network and binder distribution state, increases the peel strength, reduces a resistance of the positive electrode sheet, thereby reducing a direct current resistance (DCR) of a lithium-ion battery and increasing rate-discharge energy efficiency of the lithium-ion battery.

### Technical Solution

**In** a first aspect, the present disclosure provides a positive electrode sheet. The positive electrode sheet includes a positive electrode current collector and a positive electrode active material layer disposed on at least one surface of the positive electrode current collector. The positive electrode active material layer includes a dispersing aid, a lithium iron phosphate (LFP) positive electrode material, conductive carbon black, and carbon nanotubes (CNT). The dispersing aid, lithium iron phosphate positive electrode material, conductive carbon black, and carbon nanotubes in the positive electrode active material layer satisfies a relationship: 30≤(B1 × C1+B2 × C2+B3 × C3)/A × 0.01 ≤500. In detail, A is a mass proportion of the dispersing aid in the positive electrode active material layer, B1 is a specific surface area of the lithium iron phosphate positive electrode material, C1 is a mass proportion of the lithium iron phosphate positive electrode material in the positive electrode active material layer, B2 is a specific surface area of the conductive carbon black, C2 is a mass proportion of the conductive carbon black in the positive electrode active material layer, B3 is a specific surface area of the carbon nanotubes, and C3 is a mass proportion of the carbon nanotubes in the positive electrode active material layer.

**In** a second aspect, the present disclosure provides a method for preparing the positive electrode sheet as described in the first aspect. The method includes the following operations.

A dispersing aid, a lithium iron phosphate positive electrode material, conductive carbon black, carbon nanotubes, and a binder are dry-mixed to produce a mixture, and a solvent is added to the mixture to obtain a positive electrode slurry.

A surface of a positive electrode current collector is coated with the positive electrode slurry, and then dried, cold-pressed, and die-cut to produce the positive electrode sheet.

During a preparation process of the positive electrode sheet in the present disclosure, by ensuring good dispersion of multi-component materials including LFP, conductive carbon black, CNT, and the binder in a positive electrode system, and ensuring good distribution of a conductive agent and the binder, the resistance and peel strength of the positive electrode sheet can be improved, and further reducing the DCR and enhancing rate performance.

**In** a third aspect, the present disclosure provides a lithium-ion battery. The lithium-ion battery includes the positive electrode sheet as described in the first aspect, a negative electrode sheet, and an electrolyte.

### Beneficial Effects

Compared to prior art, the present disclosure has the following beneficial effects.
1. By reasonably adjusting the proportion and specific surface area of LFP in the positive electrode active material layer, the proportion and specific surface area of the conductive agent in the positive electrode active material layer, as well as an addition amount of the dispersing aid in the positive electrode active material layer, multiple characteristic parameters satisfy a specific relationship, which promotes dispersion of multi-component materials, ensures a good conductive network and binder distribution state, increases the peel strength, reduces the resistance of the positive electrode sheet, thereby reducing the DCR of the lithium-ion battery and increasing the rate-discharge energy efficiency of the lithium-ion battery.
**2.** In the preparation process of the positive electrode sheet in the present disclosure, the positive electrode slurry can achieve a discharge solid content exceeding 68.2%, with a discharge viscosity controlled within 13,500 mPa·s. After the cold pressing, the peel strength of the positive electrode sheet can reach over 0.42 N/mm, and the resistance of the positive electrode sheet can be reduced to below 0.3 Ω. After the cold pressing, the peel strength of the positive electrode sheet can reach over 0.42 N/mm, and the resistance of the positive electrode sheet can be reduced to below 0.3 Ω. The secondary battery produced from the positive electrode sheet can have a DCR at 50% state of charge (SOC) at 25 °C of below 38 mΩ, and may have an energy efficiency at 25 °C for 3C of over 80.2%. The positive electrode sheet in the present disclosure does not use additional conductive agents, which greatly shortens a dispersion time of the positive electrode slurry, reduces production costs, and improves production efficiency. The lithium-ion battery shows excellent performance in terms of normal temperature 3C rate charge/discharge performance, high-temperature storage, and long-cycle high-temperature performance.

Other aspects can be understood after reading and understanding the drawings and detailed descriptions.

### BRIEF DESCRIPTION OF THE DRAWINGS

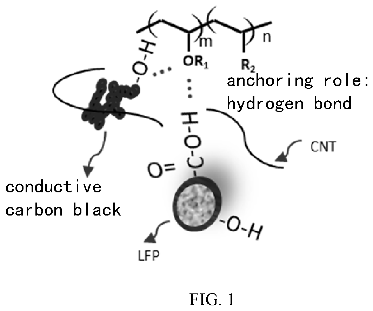

**FIG.** 1 is a schematic view of a function of a dispersing aid in some embodiments of the present disclosure.

### DETAILED DESCRIPTION OF THE PRESNET DISCLSOURE

**In** a first aspect, the present disclosure provides a positive electrode sheet. The positive electrode sheet includes a positive electrode current collector and a positive electrode active material layer disposed on at least one surface of the positive electrode current collector. The positive electrode active material layer includes a dispersing aid, a lithium iron phosphate (LFP) positive electrode material, conductive carbon black, and carbon nanotubes (CNT). The dispersing aid, lithium iron phosphate positive electrode material, conductive carbon black, and carbon nanotubes in the positive electrode active material layer satisfies a relationship: 30≤(B1 × C1+B2 × C2+B3 × C3)/A × 0.01≤500. In detail, A is a mass proportion of the dispersing aid in the positive electrode active material layer, B1 is a specific surface area of the lithium iron phosphate positive electrode material, C1 is a mass proportion of the lithium iron phosphate positive electrode material in the positive electrode active material layer, B2 is a specific surface area of the conductive carbon black, C2 is a mass proportion of the conductive carbon black in the positive electrode active material layer, B3 is a specific surface area of the carbon nanotubes, and C3 is a mass proportion of the carbon nanotubes in the positive electrode active material layer.

**In** the above-mentioned relationship in the present disclosure, a unit of each mass proportion is %. For example, in a case where C1=95%, then in the calculation formula, C1 is calculated as 95.

**In** the present disclosure, the dispersing aid is added to the positive electrode sheet. An actual surface area of carbon in the positive electrode active material layer has a synergistic effect on processing performance and electrical performance of the positive electrode slurry together with the addition amount of the dispersing aid and structure of the dispersing aid. In detail, the actual surface area of carbon in the positive electrode active material layer is a sum of a surface area of LFP and a surface area of carbon content of the conductive agent such as conductive carbon black and CNT. It is understood that LFP contains carbon which is evenly distributed, and thus a surface area of carbon in LFP is the surface area of LFP. Based on the above relationship and property of the dispersing aid, the solid content of the positive electrode slurry can be improved, stability of the positive electrode slurry can be enhanced, and an amount of N-Methyl-2-pyrrolidone (NMP) can be significantly reduced, and issues such as cracking in thick positive electrode systems and enhancing the peel strength of the positive electrode sheet can be addressed, and ultimately reducing preparation costs of battery cells while improving production efficiency of the battery cells. In terms of a lithium-ion battery, the resistance of the positive electrode sheet can be improved, the DCR can be reduced, and the rate-discharge energy efficiency can be enhanced.

**In** some embodiments, a structural formula of the dispersing aid is 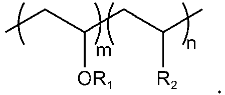 In detail, R1 includes at least one selected from the group consisting of methyl, ethyl, and propyl. R2 includes at least one selected from the group consisting of methyl ester group, ethyl ester group, and propyl ester group. m is in a range of 1-3, including but not limited to specific examples such as 1, 2, or 3. n is in the range of 1-3, including but not limited to specific examples such as 1, 2, or 3.

**In** the present disclosure, the dispersing aid mainly adsorbs or anchors on surfaces of materials to form a sufficiently thick adsorption layer. Solvated chains can present an extended conformation in NMP. A carbon layer on a surface of LFP, conductive carbon black, and surfaces of CNT contain a large number of oxygen-containing functional groups such as carboxyl, hydroxyl, or epoxy groups, which form hydrogen bonding interactions with alkoxy groups in the dispersing aid. Polyester-based solvated chains in the dispersing aid have good compatibility with NMP, promoting extension of the dispersing aid in the solvent, causing the dispersing aid to coat the materials, such as LFP, conductive carbon black, and CNT, and form steric hindrance, preventing agglomeration of the materials, and promoting slippage between molecules. As a result, an internal friction force is reduced, the slurry viscosity is lowered, and improvements in the discharge solid content, prevention of an upward movement of PVDF, and prevention of cracking of the positive electrode sheet in a high-speed coating process are achieved.

**In** some embodiments, in the positive electrode active material layer, the mass proportion A of the dispersing aid is in a range of 0.05%-0.3%, including but not limited to specific examples such as 0.05%, 0.08%, 0.1%, 0.2%, or 0.3%, and other unlisted values within the numerical range are also applicable.

**In** some embodiments, the specific surface area B1 of the lithium iron phosphate positive electrode material is in a range of 10 m²/g-20 m²/g, including but not limited to specific examples such as 10 m²/g, 12 m²/g, 15 m²/g, 18 m²/g, or 20 m²/g, and other unlisted values within the numerical range are also applicable.

**In** some embodiments, in the positive electrode active material layer, the mass proportion C1 of the lithium iron phosphate positive electrode material is in a range of 95%-98%, including but not limited to specific examples such as 95%, 95.5%, 96%, 97%, or 98%, and other unlisted values within the numerical range are also applicable.

In some embodiments, a surface carbon content of the lithium iron phosphate positive electrode material is in a range of 1.0%-2.5%, including but not limited to specific examples such as 1.0%, 1.2%, 1.5%, 2%, or 2.5%, and other unlisted values within the numerical range are also applicable.

**In** some embodiments, the specific surface area B2 of the conductive carbon black is in a range of 50 m²/g-150 m²/g, including but not limited to specific examples such as 50 m²/g, 80 m²/g, 100 m²/g, 120 m²/g, or 150 m²/g, and other unlisted values within the numerical range are also applicable.

**In** some embodiments, in the positive electrode active material layer, the mass proportion C2 of the conductive carbon black is in a range of 0.5%-2%, including but not limited to specific examples such as 0.5%, 0.8%, 1%, 1.5%, or 2%, and other unlisted values within the numerical range are also applicable.

**In** some embodiments, the specific surface area B3 of the carbon nanotubes is in a range of 200 m²/g-300 m²/g, including but not limited to specific examples such as 200 m²/g, 220 m²/g, 250 m²/g, 280 m²/g, or 300 m²/g, and other unlisted values within the numerical range are also applicable.

**In** some embodiments, in the positive electrode active material layer, the mass proportion C3 of the carbon nanotubes is in a range of 0.1%-1%, including but not limited to specific examples such as 0.1%, 0.2%, 0.5%, 0.8%, or 1%, and other unlisted values within the numerical range are also applicable.

In some embodiments, the positive electrode active material layer further includes a binder.

In some embodiments, the binder includes polyvinylidene fluoride.

**In** a second aspect, the present disclosure provides a method for preparing the positive electrode sheet as described in the first aspect. The method includes the following operations.

A dispersing aid, a lithium iron phosphate positive electrode material, conductive carbon black, carbon nanotubes, and a binder are dry-mixed to produce a mixture, and a solvent is added to the mixture to obtain a positive electrode slurry.

A surface of a positive electrode current collector is coated with the positive electrode slurry, and then dried, cold-pressed, and die-cut to produce the positive electrode sheet.

During a preparation process of the positive electrode sheet in the present disclosure, by ensuring good dispersion of multi-component materials including LFP, conductive carbon black, CNT, and the binder in a positive electrode system, and ensuring good distribution of a conductive agent and the binder, the resistance and peel strength of the positive electrode sheet can be improved, and further reducing the DCR and enhancing the rate performance.

In a third aspect, the present disclosure provides a lithium-ion battery. The lithium-ion battery includes the positive electrode sheet as described in the first aspect, a negative electrode sheet, and an electrolyte.

In some embodiments, an electrolyte injection amount in the lithium-ion battery is in a range of 4.2 g/Ah-5.2 g/Ah, including but not limited to specific examples such as 4.2 g/Ah, 4.5 g/Ah, 4.8 g/Ah, 5 g/Ah, or 5.2 g/Ah, and other unlisted values within the numerical range are also applicable.

The following further illustrates the technical solutions of the present disclosure through specific implementation manners. Those skilled in the art should understand that the examples are only for helping to understand the present disclosure and should not be regarded as specific limitations on the present disclosure.

In examples and comparative examples of the present disclosure, A is a mass proportion of a dispersing aid in a positive electrode active material layer, B1 is a specific surface area of a lithium iron phosphate positive electrode material, C1 is a mass proportion of the lithium iron phosphate positive electrode material in the positive electrode active material layer, B2 is a specific surface area of conductive carbon black, C2 is a mass proportion of conductive carbon black in the positive electrode active material layer, B3 is a specific surface area of carbon nanotubes, and C3 is a mass proportion of carbon nanotubes in the positive electrode active material layer.

### Example 1

A positive electrode sheet was provided in Example 1, and a method for preparing the positive electrode sheet included the following operations.
(1) LFP, conductive carbon black, CNT, a dispersing aid, and PVDF were mixed together in a mass ratio of 95:2:1:0.05:1.7 to produce a mixture. In other words, C1:C2:C3:A:(100-(C1+C2+C3+A))=95:2:1:0.05:1.7. Then NMP as a solvent was added to the mixture to obtain a positive electrode slurry. In detail, a surface carbon content of LFP was 2.5%, a structural formula of the dispersing aid was 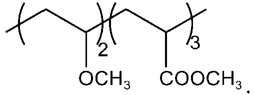
**(2)** After the positive electrode slurry was homogenized, an aluminum foil was coated with the homogenized positive electrode slurry. Subsequently, drying, cold pressing, die cutting, and other processes were performed on the coated aluminum foil to produce the positive electrode sheet. Particularly, B1=20 m²/g, B2=150 m²/g, B3=280 m²/g, and (B1×C1+B2×C2+B3×C3)/A×0.01=496.

A schematic view of a function of the dispersing aid in the positive electrode sheet is shown in FIG. 1.

### Example 2

A positive electrode sheet was provided in Example 1, and a method for preparing the positive electrode sheet included the following operations.
(1) LFP, conductive carbon black, CNT, a dispersing aid, and PVDF were mixed together in a mass ratio of 97.35:0.5:0.3:0.3:1.5 to produce a mixture. In other words, C1:C2:C3:A:(100-(C1+C2+C3+A))= 97.35:0.5:0.3:0.3:1.5. Then NMP as a solvent was added to the mixture to obtain a positive electrode slurry. In detail, a surface carbon content of LFP was 1.0%, a structural formula of the dispersing aid was 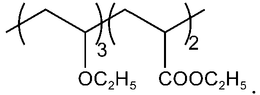
**(2)** After the positive electrode slurry was homogenized, an aluminum foil was coated with the homogenized positive electrode slurry. Subsequently, drying, cold pressing, die cutting, and other processes were performed on the coated aluminum foil to produce the positive electrode sheet. Particularly, B1=10 m²/g, B2=50 m²/g, B3=200 m²/g, (B1 × C1+B2 × C2+B3 × C3)/A × 0.01=35.

A schematic view of a function of the dispersing aid in the positive electrode sheet is shown in FIG. 1.

### Example 3

A positive electrode sheet was provided in Example 1, and a method for preparing the positive electrode sheet included the following operations.
(1) LFP, conductive carbon black, CNT, a dispersing aid, and PVDF were mixed together in a mass ratio of 96:1:0.5:0.2:2.3 to produce a mixture. In other words, C1:C2:C3:A:(100-(C1+C2+C3+A))=96:1:0.5:0.2:2.3. Then NMP as a solvent was added to the mixture to obtain a positive electrode slurry. In detail, a surface carbon content of LFP was 1.8%, a structural formula of the dispersing aid was 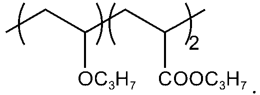
(2) After the positive electrode slurry was homogenized, an aluminum foil was coated with the homogenized positive electrode slurry. Subsequently, drying, cold pressing, die cutting, and other processes were performed on the coated aluminum foil to produce the positive electrode sheet. Particularly, B1=15 m²/g, B2=85 m²/g, B3=240 m²/g, (B1×C1+B2×C2+B3×C3)/A×0.01=82.

A schematic view of a function of the dispersing aid in the positive electrode sheet is shown in FIG. 1.

### Example 4

Differences between the present example and Example 3 lay in that B1=10 m²/g, B2=180 m²/g, B3=320 m²/g, (B1×C1+B2×C2+B3×C3)/A×0.01=65, and all other conditions and parameters were exactly the same as those in Example 3.

### Example 5

Differences between the present example and Example 3 lay in that B1=25 m²/g, B2=40 m²/g, B3=150 m²/g, (B1×C1+B2×C2+B3×C3)/A×0.01=125, and all other conditions and parameters were exactly the same as those in Example 3.

### Example 6

Differences between the present example and Example 3 lay in that B1=15 m2/g, B2=100 m2/g, B3=150 m2/g, (B1×C1+B2×C2+B3×C3)/A×0.01=80, and all other conditions and parameters were exactly the same as those in Example 3.

### Example 7

Differences between the present example and Example 3 lay in that B1=15 m²/g, B2=40 m²/g, B3=250 m²/g, (B1×C1+B2×C2+B3×C3)/A×0.01=80, and all other conditions and parameters were exactly the same as those in Example 3.

### Comparative Example 1

Differences between the present comparative example and Example 1 lay in that C1:C2:C3:A:100-(C1+C2+C3+A)=94:2.5:0.5:0.03:2.6, B1=25 m²/g, B2=180 m²/g, B3=320 m²/g, and (B1×C1+B2×C2+B3×C3)/A×0.01=987, and all other conditions and parameters were exactly the same as those in Example 3.

### Comparative Example 2

Differences between the present comparative example and Example 1 lay in that C1:C2:C3:A:100-(C1+C2+C3+A)=98.47:0.3:0.2:0.4:1, B1=6 m²/g, B2=35 m²/g, B3=150 m²/g, (B1×C1+B2×C2+B3×C3)/A×0.01=7, and all other conditions and parameters were exactly the same as those in Example 3.

### Comparative Example 3

A difference between the present comparative example and Example 1 lay in that no dispersing aid was used, and all other conditions and parameters were exactly the same as those in Example 3.

### Performance Test:

1. A discharge solid content, a discharge viscosity, a peel force of a positive electrode sheet after the cold pressing, and a resistance of the positive electrode sheet during a preparation process of the positive electrode sheet in each of the examples and comparative examples were recorded.
2. Graphite, CMC, SBR, and conductive carbon black were mixed in a mass ratio of 96:1.5:1.5:1 to obtain a mixture. Then deionized water as a solvent was added to the mixture to obtain a mixed liquid. The mixed liquid was then stirred evenly, and then coated on a copper foil. Subsequently, drying, cold pressing, die cutting, and other processes were performed on the coated copper foil, and then a negative electrode sheet was obtained. The positive electrode sheet prepared in each of the examples and comparative examples, a separator (selected as Enjie 12µm separator), and the negative electrode sheet were stacked in order to obtain an assembly. The separator was placed between the positive electrode sheet and negative electrode sheet to play a role of isolation. Then the assembly was laminated or wound to obtain a core. The core was placed in an outer packaging shell (such as aluminum shell or soft package), and then an electrolyte (selected as Zhonghua Lantian ZP507 type) was injected into the outer packaging shell according to an injection amount as mentioned above in the present disclosure after drying to obtain a semi-finished product. Then processes such as vacuum packaging, standing, formation, and capacity grading were performed on the semi-finished product to produce a secondary battery. Electrical performance tests were conducted on the secondary battery.

### 1. 25°C HPPC Test

a. Under a temperature of 25±2°C, the secondary battery was cycled to charge and discharge at 0.5 C/0.5 C for 5 weeks.
**b.** The secondary battery stood for 24 h under the temperature of 25+2°C.
**c.** The secondary battery was discharged at a constant current of 1.0C for 10s, and stood for 1 min after discharge.
**d.** SOC at 0.2 C of the secondary battery was adjusted, and the secondary battery stood for 1 h.
**e.** The secondary battery was charged at a constant current of 1.0 C for 10 s and stood for 1min after charging.
**f.** Discharge DCR Calculation: After the SOC was adjusted, the secondary battery stood for 1 h. A terminal voltage was recorded as VD0. After the secondary battery was discharged at a constant current of 1.0C for 10s, the terminal voltage was recorded as VD10. Particularly, DCR=(VD0-VD10)/I.
**g.** The secondary battery was tested for DCR at 50% SOC.

### 2. 25°C Discharge Performance

**a.** The secondary battery stood for 10 min under the temperature of 25±2°C, and the secondary battery was cycled at 0.5 C/0.5 C for 5 cycles.
**b.** The secondary battery was charged at a constant current constant voltage of 0.5 C.
**c.** The secondary battery stood for 10 min at 25±2°C.
**d.** The secondary battery discharged at a current of 3 C until a battery voltage of the secondary battery reached 2.0 V and then stopped discharging.
**e.** A discharge energy efficiency of the second battery was recorded. Test results are shown in Table 1.

**Table 1**

| | discharge solid content (%) | discharge viscosity (mPa.s) | peel force after cold pressing (N/30mm) | positive electrode sheet resistance(Ω) | 25°C DCR 50%SOC (mΩ) | 25°C 3 C energy efficiency(%) |
|---|---|---|---|---|---|---|
| Ex. 1 | 68.2 | 12000 | 0.42 | 0.29 | 36.5 | 81.4 |
| Ex. 2 | 69.8 | 13500 | 0.44 | 0.30 | 38.0 | 80.2 |
| Ex. 3 | 68.7 | 11050 | 0.46 | 0.26 | 34.7 | 83.0 |
| Ex. 4 | 68.8 | 13150 | 0.25 | 0.43 | 43.4 | 77.4 |
| Ex. 5 | 68.5 | 12050 | 0.29 | 0.35 | 38.4 | 80.5 |
| Ex. 6 | 68.2 | 12000 | 0.33 | 0.42 | 41.0 | 79.9 |
| Ex. 7 | 68.8 | 12850 | 0.37 | 0.39 | 39.8 | 80.2 |
| Comp. Ex. 1 | 64.0 | 11850 | 0.26 | 0.45 | 44.8 | 76.0 |
| Comp. Ex. 2 | 68.4 | 14050 | 0.21 | 0.52 | 48.5 | 74.7 |
| Comp. Ex. 3 | 61.8 | 13000 | 0.27 | 0.46 | 43.4 | 76.8 |

**It** can be seen from Table 1 that, from Examples 1-3, in a preparation process of the positive electrode sheet in the present disclosure, the positive electrode slurry can achieve a discharge solid content exceeding 68.2%, with a discharge viscosity controlled within 13,500 mPa·s. After the cold pressing, a peel force of the positive electrode sheet can reach over 0.42 N/mm, and a resistance of the positive electrode sheet can be reduced to below 0.3 Ω. After the cold pressing, the peel force of the positive electrode sheet can reach over 0.42 N/mm, and the resistance of the positive electrode sheet can be reduced to below 0.3 Ω. The secondary battery produced from the positive electrode sheet can have a DCR at 50% state of charge (SOC) at 25 °C of below 38 mΩ, and may have an energy efficiency at 25 °C for 3C of over 80.2%. The positive electrode sheet in the present disclosure does not use additional conductive agents, which greatly shortens a dispersion time of the positive electrode slurry, reduces production costs, and improves production efficiency. The secondary battery shows excellent performance in terms of normal temperature 3C rate charge/discharge performance, high-temperature storage, and long-cycle high-temperature performance.

**By** comparing Example 3 with Examples 4-7, in the positive electrode sheet of the present disclosure, the specific surface area B1 of the lithium iron phosphate positive material, the specific surface area B2 of conductive carbon black, and the specific surface area B3 of carbon nanotubes may affect performance of the positive electrode sheet. Controlling B1 within 10 m²/g-20 m²/g, B2 within 50 m²/g-150 m²/g, and B3 within 200 m²/g-300 m²/g can result in better performance of the positive electrode sheet. If either of B1, B2, or B3 exceeds a corresponding above-mentioned range, the performance of the positive electrode sheet may decline significantly and may decline to different degrees.

**It** can be seen that, by comparing Example 1 with Comparative Examples 1-2, by reasonably adjusting the proportion and specific surface area of LFP, the proportion and specific surface area of a conductive agent, as well as an addition amount of the dispersing aid, multiple characteristic parameters satisfy a specific relationship, which promotes dispersion of multi-component materials, ensures a good conductive network and binder distribution state, increases the peel strength, reduces the resistance of the positive electrode sheet, thereby reducing the DCR of the secondary battery and increasing rate-discharge energy efficiency of the secondary battery.

**It** can be seen that, by comparing Example 1 with Comparative Example 3, in the present disclosure, the dispersing aid mainly adsorbs or anchors on surfaces of materials to form a sufficiently thick adsorption layer. Solvated chains can present an extended conformation in NMP. A carbon layer on a surface of LFP, conductive carbon black, and surfaces of CNT contain a large number of oxygen-containing functional groups such as carboxyl, hydroxyl, or epoxy groups, which form hydrogen bonding interactions with alkoxy groups in the dispersing aid. Polyester-based solvated chains in the dispersing aid have good compatibility with NMP, promoting extension of the dispersing aid in the solvent, causing the dispersing aid to coat the materials, such as LFP, conductive carbon black, and CNT, and form steric hindrance, preventing agglomeration of the materials, and promoting slippage between molecules. As a result, an internal friction force is reduced, the slurry viscosity is lowered, and improvements in the discharge solid content, prevention of an upward movement of PVDF, and prevention of cracking of the positive electrode sheet in a high-speed coating process are achieved.

## Claims

1. A positive electrode sheet, comprising a positive electrode current collector and a positive electrode active material layer disposed on at least one surface of the positive electrode current collector; the positive electrode active material layer comprises a dispersing aid, a lithium iron phosphate positive electrode material, conductive carbon black, and carbon nanotubes, the dispersing aid, lithium iron phosphate positive electrode material, conductive carbon black, and carbon nanotubes in the positive electrode active material layer satisfies a relationship: 30≤(B1 × C1+B2 × C2+B3 × C3)/A × 0.01 ≤ 500*,* wherein A is a mass proportion of the dispersing aid in the positive electrode active material layer, B1 is a specific surface area of the lithium iron phosphate positive electrode material, C1 is a mass proportion of the lithium iron phosphate positive electrode material in the positive electrode active material layer, B2 is a specific surface area of the conductive carbon black, C2 is a mass proportion of the conductive carbon black in the positive electrode active material layer, B3 is a specific surface area of the carbon nanotubes, and C3 is a mass proportion of the carbon nanotubes in the positive electrode active material layer.

2. The positive electrode sheet as claimed in claim 1, wherein a structural formula of the dispersing aid is 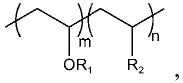 wherein R₁ comprises at least one selected from the group consisting of methyl, ethyl, and propyl, R₂ comprises at least one selected from the group consisting of methyl ester group, ethyl ester group, and propyl ester group, m is in a range of 1-3, and n is in the range of 1-3.

3. The positive electrode sheet as claimed in claim 1 or 2, wherein in the positive electrode active material layer, the mass proportion A of the dispersing aid is in a range of 0.05%-0.3%.

4. The positive electrode sheet as claimed in any one of claims 1-3, wherein the specific surface area B1 of the lithium iron phosphate positive electrode material is in a range of 10 m²/g-20 m²/g.

5. The positive electrode sheet as claimed in any one of claims 1-4, wherein in the positive electrode active material layer, the mass proportion C1 of the lithium iron phosphate positive electrode material is in a range of 95%-98%.

6. The positive electrode sheet as claimed in any one of claims 1-5, wherein a surface carbon content of the lithium iron phosphate positive electrode material is in a range of 1.0%-2.5%.

7. The positive electrode sheet as claimed in any one of claims 1-6, wherein the specific surface area B2 of the conductive carbon black is in a range of 50 m²/g-150 m²/g.

8. The positive electrode sheet as claimed in any one of claims 1-7, wherein in the positive electrode active material layer, the mass proportion C2 of the conductive carbon black is in a range of 0.5%-2%.

9. The positive electrode sheet as claimed in any one of claims 1-8, wherein the specific surface area B3 of the carbon nanotubes is in a range of 200 m²/g-300 m²/g.

10. The positive electrode sheet as claimed in any one of claims 1-9, wherein in the positive electrode active material layer, the mass proportion C3 of the carbon nanotubes is in a range of 0.1%-1%.

11. The positive electrode sheet as claimed in any one of claims 1-10, wherein the positive electrode active material layer further comprises a binder.

12. The positive electrode sheet as claimed in any one of claims 11, wherein the binder comprises polyvinylidene fluoride.

13. A method for preparing the positive electrode sheet as claimed in any one of claims 1-12, comprising:
mixing a dispersing aid, a lithium iron phosphate positive electrode material, conductive carbon black, carbon nanotubes, and a binder in a dry manner to produce a mixture, and adding a solvent to the mixture to obtain a positive electrode slurry; and
coating a surface of a positive electrode current collector with the positive electrode slurry, and drying, cold-pressing, and die-cutting the coated positive electrode current collector to produce the positive electrode sheet.

14. A lithium-ion battery, comprising the positive electrode sheet as claimed in any one of claims 1-12, a negative electrode sheet, and an electrolyte.

15. The lithium-ion battery as claimed in claim 14, wherein an electrolyte injection amount in the lithium-ion battery is in a range of 4.2 g/Ah-5.2 g/Ah.
